# EUROPEAN PATENT APPLICATION

(11) **EP 2 701 099 A1**
(43) Date of publication of application: **26.02.2014**
(21) Application number: 12181724.1
(22) Date of filing: 24.08.2012
(51) Int. Cl.: G06K 17/00, G06Q 30/06

(54) **Computer network for dynamically controlling qr-codes**

(71) Applicant: I4pack GmbH, 6020 Innsbruck (AT)
(72) Inventor: Weiss, Ludwig, Dr., 86438 Kissing (DE)
(74) Representative: Stolmár & Partner

(57) **Abstract**

Present invention refers to a computer network, a central server computer (S) and a method for exchanging data between a mobile device (H) and the central server computer (S) for dynamically associating a response message (RM) to a physical product (P). The mobile device (H) comprises a scanner (SCAN), a position detector (PD), a Transmitter (T) and a display (D). The transmitter transmits a QR-package (QR-P) to the central server (S). The central server (S) receives the QR-package (QR-P) and accesses a database (MEM) for looking up a second code, a QR-Code (QR-C), in order to generate a response message (RM), comprising a response procedure signal (SIG) and/or a second Code, a barcode. Further, the server comprises a procedure initiator module (PIM) for initiating product-related procedures. The response message (RM) is sent back to the mobile device (H) for further processing.

## Description

### FIELD OF THE INVENTION

The present invention relates to controlling labeling of physical products and, more specifically, to a technique for dynamically associating a Code to the physical product, which may comprise instructions to initiate further actions with respect to the physical product.

Moreover, the present invention refers to a computer network for processing data and instructions with respect to the coded physical product.

### DESCRIPTION OF THE RELATED ART

For example in vehicle manufacturing or in manufacturing of other technical products known systems usually comprise a labeling of the product as such or of parts of the product (in case of vehicle manufacturing, for example car wings, windows, specific electronic devices etc.). In case of selling end consumer products in a supermarket or store, usually also these products are labeled or coded with specific digital Codes. These Codes are later imported and processed in a cashier in order to factorize these products and - at the end - the end consumer has to pay the specific price the cashier has processed, based on the Code.

Typically QR-Codes are used for this purpose. QR-Code stands for quick response or quick response Code and is a two-dimensional Code, in the form of a matrix, which originally was designed for product identification in the automotive industry.

Basics for the QR-Code and methods for reading the Code has been patented by the European Patent Office in EP 0 672 994 B1.

Nowadays QR-Codes are used for a wide variety of applications like commercial tracking, event marketing, entertainment ticketing, product marketing, mobile couponing and the like. In print media for example, QR-Codes help people to load a webpage on the browser of their smartphone or to another personal mobile device by simply photographing or scanning the QR-Code, which has been printed on the article in a print media, and which later is translated by a QR-Code reader in an URL-address (url: uniform resource locator) in order to link the smartphone's web browser directly to the URL-addressed and encoded webpage.

Another application of QR-Codes which becomes more and more popular is to label end consumer articles or products of daily use (e.g. in a supermarket). The QR-Codes on the products are helpful for the end consumers, because the end consumer may use his mobile device in order to scan the QR-Code of the product and after processing of the QR-Code he may be linked to the specific webpage where he can find additional information.

In the context of product labeling it is necessary that the user uses his mobile phone with an installed QR-Code scanning application. This application transforms the scanned QR-Code to a web address and displays an option on the smartphone's browser to load the corresponding webpage on the user's smartphone.

Generally, QR-Codes may be embedded by non-limiting examples in end consumer products, on print media such as advertising material or business cards and on subassembly members within (for example: automobile) manufacturing. Due to their wide distribution several software plug-ins and web-based converters are available that automatically generate QR-Codes. The programs for QR-Code generation may be downloaded from generator websites and might be executed remote on a client's electronic device. Correspondingly, the respective counterpart, namely QR-Code readers are also available in different facets for different platform and operating systems (for example iTunes and Android systems).

Generally, the QR-Code is clearly defined and published as an ISO standard. The information or data which is encoded in the Code comprises error correction and a mask pattern for the message placement. The mask patterns may be defined on a 6x6 grid that is repeated as necessary to cover the whole information or symbol. Modules corresponding to black or dark areas of the mask are inverted.

There do exist different variants of the QR-Code, like the micro QR-Code, which refers to a smaller version of the QR-Code, typically encoding information up to 35 numeric characters (whereas, by contrast, the standard QR-Code can contain more than 7000 characters). Further variants are the Datamatrix Code, the Microsoft tag, the Bee tag, the tag from ScanLife, which do allow more creativity for designers than the QR Code which was originally developed by the Toyota subsidiary Denso Wave to track vehicles during the manufacturing process or the more cumbersome JagTag which does not need a reader but makes use of an online translation service. Further, custom or artistic QR-Codes may be applied by adding other elements (pictorial elements and other textual information) to the Code as such.

In state of the art systems it is also known to use barcodes (for example in case the modern version referring to the QR-Code is not available in the specific use case). The barcode is also an optical machine-readable digital representation of data or information which may be attached to a product. Generally, barcodes refer to a two-dimensional Code, which may be represented in form a rectangle. Barcodes are used with barcode readers in order to scan the barcodes on a product. Barcode readers (also referred as barcode scanners) comprise at least one photo sensor or a camera and in general more interfaces. Typically, different computer operating systems or platforms comprise (embedded) barcode readers. For example, on PC's running windows operating system there are provided the so-called HID interfaces (HID: Human Interface Device) emulating the data merging action of a hardware "keyboard wedge" so that the scanner automatically behaves like an additional keyboard. Other operating systems, for example the Google's mobile Android operating system or Apple's iOS operating system use other barcode readers.

Compared to the barcode the QR-Code shows a number of advantages. Thus, the QR-Code can be one tenth of the size of the barcode. Furthermore, QR-Codes are capable of storing all types of data including numeric, alphabetic and symbol data. Moreover, QR-Codes are much more resistant to damage than barcodes, because the QR-Code is able to correct errors up to 30 %. Finally, the three square-shaped marks on three corners of the label let the symbol be read with the same result from any visual angle. This makes the use of the QR-Code more flexible and drives its penetration in our daily life.
Alternate technology options (such as RFID (near field radio frequency identification) are ways off from being as widespread as QR codes. Despite the advantages of QR-Codes and the continuously growing popularity of the same, normally in supermarkets barcodes are used. The reason for this is due to the fact that in markets and stores the cash registers typically are equipped with a barcode reader and not with a QR-Code reader. The barcode reader in the cashier has the function to read-in the barcode of the product and to look up the corresponding name of the product and the unit price, being stored in a database, which is accessed by the cashier.
While QR Codes simplify the way mobile phone users can get information a major disadvantage of prior art system is to be seen in the fact that these systems are inflexible with respect to product labeling. In case the product is labeled with a specific Code (barcode or QR-Code) the Code is statically fixed on the product. Thus, the product is associated to its Code in a fixed manner, which cannot be changed after labeling of the product. Another disadvantage is to be seen in the fact that product-related actions (for example like discount actions) may only be executed locally by applying an amended labeling (ticketing and packaging process for the products) and by amending the specific data entries in the database, which is accessed by the cashier. As a consequence, when running different product marketing campaigns for example, it is necessary to adapt the packaging of the respective product by changing the QR-Code in advanve to the marketing campaign. It is not possible to control product-related actions centrally (which means to be controlled by one single central instance which controls the actions for more than one specific selling instance (like a supermarket) and for more than one single client as a manufacturer of the respective product). It is not possible to change labeling of the products after products have already been labeled with a first code. Moreover, it would be beneficial to control labeling of the products independent of the user's position/location and/or with respect to the time (point of time or time interval).

### OBJECT OF THE INVENTION

It is therefore an object of the invention to provide computer network for dynamically controlling the labeling of physical products and/or of dynamically associating at least one product-related action to the product. Moreover, the state of the art systems should be enhanced with respect to flexibility and cost-savings (e.g. with respect to the printing costs). Further, it should be possible to provide a central control process for controlling dynamic labeling of physical products. Particularly, packaging procedures (including labeling of products) should be made less cost-intensive and more flexible. Finally, it should be possible to amend or change labeling of the product even after the product has been put onto market and packaging (including labeling) has been terminated.

### SUMMARY OF THE INVENTION

In order to accomplish the above-mentioned object and other related objects, the present invention defines a computer network for dynamically controlling labeling of physical products, a central server computer and a computer-implemented, client server-based method for dynamically controlling labeling of physical products according to the attached independent claims.

The text below describes the invention according to at least one embodiment of the invention with reference to the computer network. Features, advantages and/or alternative embodiments mentioned in this regard are likewise also to be transferred to the other claim categories (i.e. to the computer-implemented method and to the central server and/or to a computer program product) and vice versa. Accordingly, functional features of the method correspond to appropriate object type modules, particularly hardware modules, for example microprocessor modules of a chip implementation. Thus, the software-based solution of the invention is equivalent to a hardware based solution and it is irrelevant whether the solution is implemented in software and/or in appropriate hardware modules. By way of example, the method step "scanning a Code of a physical product" can thus be transferred to an appropriate "scanner" within the context of a hardware-implemented solution.

According to one aspect the invention refers to a computer network system for dynamically controlling labeling of physical products. Particularly, the computer network system relates to assigning a response message dynamically to a product, even after the product has been labeled with a first Code (by the manufacturer) and comprises:
- a mobile device with data connection(s) to a central server (for example with internet access) with:
   - a QR-Code scanner for scanning a first two-dimensional Code on the physical product,
   - a position detector which is adapted to automatically detect the actual position of the mobile device for automatically calculating a location identifier,
   - a transmitter which is adapted to generate and transmit a QR-package to at least a central server computer, wherein the QR-package comprises the first scanned Code and optionally the location identifier and/or a timestamp,
   - a display which is adapted for displaying a response message, wherein the response message is received from the central server computer in response to the transmitted QR-package;
- the central server computer with:
   - an input interface for receiving the QR-package from the transmitter of the mobile device or from other computer-based entities,
   - an access module for accessing a database by automatically generating at least one access instruction for the database, based on input parameters, comprising the at least first Code and optionally the location identifier and/or the timestamp, and providing a database access result
   - the database storing relations of at least the first Code and at least one response message, wherein the relations may be changed and configured anytime by a client and may also comprise relations with respect to other labeling data, comprising the location identifier and the timestamp and at least one configurable response procedure signal,
   - a procedure initiator module, which is adapted to automatically process the at least one response procedure signal, being related to the first Code, in response to the database access, wherein the response procedure signal is adapted to initiate a response procedure assigned to the product, if the response procedure signal is received and processed at the mobile device,
   - a response message generator which is adapted to automatically generate a response message based on the result of the database access, wherein the response message may comprise at least a second Code (particularly a barcode) and/or the response procedure signal
   - a mobile output interface of transmitting at least the generated response message to the mobile device,
wherein the first Code is static and/or is un-detachable attached to the product and wherein labeling comprises allocating the received response message to the respective product in order to dynamically associate instances of the received response message (for example the second Code, like a barcode) to the product and/or to dynamically initiate and apply the at least one configurable response procedure (represented by the response procedure signal) to the product.

In the following there is given a short explication and definition of terms, used in this disclosure.

The present invention refers to dynamically controlling the labeling process and to a dynamic labeling of physical products. This is to be construed in the sense that after the products are manufactured and provided with a first Code, which is attached statically on the product, another second Code is dynamically generated on a central server and is associated to the product as well. Thus, ever after termination of manufacturing process or production process of the respective products and even after having put the respective product in the distribution channels (for example in the shelf of a supermarket) it is possible to dynamically associate a second Code to the product. The term "dynamically" also refers to the fact that at least one configurable procedure may be dynamically associated to the respective product. The procedure may comprise a variety of different actions with regard to the respective product (for example discounting, collecting points, updating databases, participation in a lottery, etc.). It is also possible to associate a second Code to the product. In this case the second Code will be associated dynamically to the respective product. Further, the term "dynamically" refers to the fact that different second Codes may be associated to one product and it is also possible to associate one second Code to different products as well. Thus, the relation between second Code and product may be bijective, injective and surjective as well. Moreover, parameters with respect to association may be configurable, i.e. the time interval for associating the respective Code or the procedure to the product (an activation period) may be adapted dynamically and it is also possible to select different locations as "valid locations"' for this association.

The term "labeling" refers to providing an association between the product and a label. The label may be a Code, for example a QR-Code or a barcode or another representation of Code. Therefore, labeling refers to a classification of products and a structuring of product based on different parameters, being represented in the labels/Codes. Usually, the label is in form of a Code and is attached or affixed to the article or a product to be sold, like consumer articles. Another option is to affix the Code on a container or a box of the articles.

The term "product" refers to physical products on which a Code or a label or a tag should be attached or is already attached on it. The products may be end consumer products which are sold in a supermarket or in another store or the products may refer to manufacturing items and subassembly items within an assembly line (for example in automotive production). The products refer to real world products, which have a tangible nature. "Labeling", thus, may refer to different forms and categories and comprises product labeling, package labeling, foil labeling, thermal labeling, litho labeling, adhesive labelings and others.

The mobile device may be a mobile phone, a smartphone, another mobile device equipment, like iPads etc.

According to an aspect of present invention the respective mobile device comprises a Code scanner, a position detector, a transmitter and a display unit. Preferably, it is possible to use known mobile and alternative devices in order to provide the above-mentioned functionalities. The Code scanner, the position detector, the transmitter may preferably be directly embedded into the mobile device. However, it is also possible to provide all or at least one of these modules as a separate module, which is in data connection with the mobile device. The Code scanner (which may be a camera), the position detector and/or the transmitter may be implemented in software and/or in hardware, particularly as electronic modules, like microprocessor units. Alternatively, these modules are software modules, which may be implemented on the mobile device.

The Code scanner provides the function to scan a two-dimensional first Code (in the following also referred to as Code) on a physical product and to generate a digital or binary coded representation of the Code. Typically the Code is statically affixed on the product itself. Alternatively, it is also possible, that the Code is affixed on a ticket or a separate voucher or label, which may be attached to the product. The Code may be a barcode, a QR-Code or any other two-dimensional Code. Generally, the Code which is scanned by the mobile device may also be referred to within this application as first Code. First Code is assigned statically to the product and the second Code (as part of the response message) is assigned dynamically to the product.

A position detector has the function to detect the actual position of the mobile device in order to calculate a location identifier. This may be based on GPS (global positioning system) data or any other kind of navigation data.

The transmitter is adapted to generate and transmit a QR-package to the central server computer. The transmitter, moreover, provides the function to generate the QR-package. The QR-package comprises the scanned Code, the location identifier and/or a timestamp. In a first embodiment of present invention only the Code and the location identifier are combined to the QR-package. According to a second embodiment the Code and the timestamp are combined to the QR-package. In a third embodiment all three data sets are combined to the QR-package. In other embodiments additional datasets, such as the telephone number for example, are added to the QR-package.

The display of the mobile device may be a touchscreen, serving as input and output interface or a non-touch sensitive screen. It has to be noted, that the technology of the display unit is not restricted to a specific kind, so that it is possible to use resistive and/or capacitive systems. A display may be an LCD-display or an LED-display. Further, the usage of the display is not limited, so that it should be possible to use the screen with stylus, haptics/gestures or even in combination with a console or keypad. The display serves as a kind of interface for two purposes:
1. The scanned Code of the product is read-in and might be displayed on the display and
2. After having received the response message from the central server, the barcode, a voucher, an admission ticket, etc. being part of the response message is to be displayed on the display as well.

The mobile device is in data connection with the central server by means of an input interface and/or a mobile output interface. Preferably these interfaces are wireless interfaces and might be implemented on the basis of an IP-protocol. Alternatively, data exchange between the mobile device and the server may be implemented by means of a mobile (telephone) communication and network system.

The central server comprises the access module, the memory, a response message generator, the procedure initiator module and the output interface. The access module, the response message generator and/or the procedure initiator module may be implemented as software modules and/or as hardware modules and may be directly embedded into the server system.

A memory is a read/write-memory and may be a dynamic RAM (DRAM: dynamic random access memory) or other kinds of erasable and programmable memories. The memory may be an internal memory, which is directly embedded into the server. Alternatively, the memory may be an external unit which is in data connection with the server. This has the advantage that additional memory capacity may be provided due to addition of external servers. In the preferred embodiment the memory is a database, particularly a relational database which stores relations of Codes, location identifiers and/or timestamps with respect to response messages. A major aspect of present invention is to be seen that the content of the memory or the database is configurable and may be changed at any time. Preferably, a client of the server, which may be a manufacturer of a set of products may configure conditions with respect to his products. For example he may define discount conditions for a specific time interval or for a specific geographical area or location (for example in a football stadium during a football event). Thus, content of the database may be changed (WRITE access) by another (computer-based) instance compared to the instance which reads that data (READ access).

For this purpose the client sends labeling information to the server. The labeling information comprises data with respect to labeling of the products. Labeling information may comprise an association of QR-Code, barcode a procedural initiation signal and/or configuration data. The configuration data comprise a date for configuring the labeling information. Configuration data, therefore, preferably refer to a timestamp and/or a specific location area in which labeling information should be applied by the server. The labeling information is send from the client to the server. The data exchange between server and client preferably is executed over internet and related protocols. Alternatively, other data connections are possible, for example wired network connections (like WAN or WLAN or LAN).

The labeling information and the configuration data are send from the client to the server and are stored there, preferably in the memory of the central server.

The central server is adapted to receive a QR-package from the mobile device and is adapted to process this information and data by accessing the memory. Further, the server is adapted to generate a response message in response to the received QR-package. The response message may differ according to different embodiments of present invention. According to a first embodiment the response message comprises a second Code, particularly a barcode and optionally a procedure initiation signal. The response procedure signal may be a complex signal, comprising datasets in order to initiate events, actions and/or procedures with respect to the specific product the QR-package refers to. The event/action may be a discount action, point collecting action, a procedure in a social community (for example a posting a Facebook, Twitter and the like), the logging of an electronic shopping list, an initiation and processing/execution of games, like lotteries, sweepstakes, a subscription to giveaways, an admission ticket to the VIP area in a soccer stadium or a provision of additional information with respect to the product (for example notices of the manufacturer, care instructions, manufacturer instructions and/or other product-related information). Preferably, the procedural initiation signal is send as a part of the response message from the server to the mobile device. According to an embodiment it is also possible that the response message only includes the response procedure signal without a barcode.

Alternatively, the response procedure signal could also be sent to other computers (for example host of the social community system, the provider of the above-mentioned games and other events).

Additionally, the server comprises a procedure initiator module. The procedure initiator module is adapted to automatically initiate the response procedure which has to be associated to the respective QR-package according to the content of the database and the database access. The procedure initiator module typically is in data connection with other computers in order to initiate the respective events and/or actions.

A major aspect of present invention is to be seen that mainly two different types of code are processed:
1. The Code of the product also referred to as a first Code. This first Code particularly might be a QR-Code. It is also possible that the product is labeled with two different Codes a barcode and a QR-Code. Then, the QR-Code refers to the first code which is scanned by the mobile device.
2. The second Code or barcode which is sent back from the central server to the mobile device in response to the QR-package (being sent from the mobile device to the server). The barcode is associated dynamically. The second Code may also be a second QR-Code. The association between the barcode and the QR-package (and thus to the respective product) is made by accessing a database in the server or in a separate instance in data connection with the server. The association is based on configuration and labeling data which are received by the server from a client (which is the manufacturer, the distribution partner of the respective products or an event organizer).

The first Code is affixed on the product itself (directly or indirectly). The first Code is therefore statically associated to the product, whereas the second Code, preferably the barcode, is dynamically associated to the respective product. Therefore, it is possible that the barcode or the content of the barcode (i.e. the content of the digital representation of the barcode) may be changed without changing the first Code on the product itself. This response Code can for example also be a QR-Code which represents a winning ticket such as an admission ticket to a VIP area etc. Thus, a preferred embodiment may be construed as virtual labeling or ticketing of products.

Thus, it is even possible to associate different barcodes (an unlimited number of response Codes) to the same product. This may be beneficial, in situations where the client decides, for example, to offer different discounts or other actions only to a specific set of consumers:
- A first barcode may be assigned to users in a selected pre-configured postal area A,
- A second barcode may be assigned to users in a selected pre-configured postal area B and
- A third barcode may be assigned to users in a selected pre-configured postal area C.

Another option is to assign different barcodes in dependence of time (for example first barcode for events in the morning and second barcode for events in the night/evening).

The basic principles laid down in this application may be applied in at least two specific embodiments or scenarios, which of course may be applied in parallel or in combination:
1. A dynamic pricing of products, based on dynamic labeling of the respective products by means of the response message, comprising the dynamically associated response procedure signal and/or the dynamically associated barcode.
   In this scenario the end consumer and mobile device owner scans the QR-Code on the product. Then, the mobile device generates the QR-package and sends the same to the server in order to look up the specific barcode and optionally other data which are send back to the mobile device by means of the response message. After having received the response message with the barcode the barcode is displayed on the display unit of the mobile device and is put on the barcode scanner of the barcode cashier in the supermarket, so that the cashier may read the barcode on the display and factorizes the product accordingly. Optionally, other measures may be initiated, based on the procedure initiation signal, for example a credit voucher or a list entry etc. Thus, cash registers do not have to have a QR-Code reader implemented (which is regularly the case) and there is also in the future no need to invest into an additional QR-Code reader beside the already established barcode reader.
2. Initiating a competition or a lottery or any kind of win game, based on the product.
   This case, the consumer and the mobile device owner scans the QR-Code on the product, which is read in by the mobile device and is processed according to the principles of present application. Typically, the end consumer is automatically linked to a webpage where he can access further information with respect to the game. Preferably, each client may configure its own parameters for the win game. For example, based on the received QR-Code a database is accessed in which relations between QR-Codes and game information, like win information is stored. The result of this game information (comprising information whether or not the consumer has won a price) is sent back to the user's handy. The result (e.g. a voucher or the admission ticket to a VIP area at an event, the consumer participates) may be sent back in the response message from the central server to the mobile device. In this scenario it is possible that the response procedure signal and/or the barcode refer to game information, so that the consumer may be informed about the result of his game immediately.

Typically, the server is a platform for a plurality of different clients. Each client may be manufacturer of a plurality of different products. The server hosts a client-specific client management system for all of the clients in which he may log in and out according to his preferences. Optionally, the server may be a platform for different stores, supermarkets and other providers in which one of the plurality of different products is sold, offered and/or processed.

According to a first embodiment the response message is bijectively associated to the QR-package (and thus to the respective product, the QR-package refers to). In other embodiments the response message is not uniquely associated to the QR-package, but to a set of QR-packages, which in turn are labeled identically. Other embodiments refer to the fact that one product may be associated to different response messages. This may be useful in case the coded product is sold but only rented or may be claimed for a specific time interval (for example licenses to download files etc.).

According to a preferred embodiment the computer network comprises not only the server and the client as a manufacturer of the product and data connection between these instances, but also client's machines, like a packaging machine with a printing machine for labeling the products with the code. Preferably, the code is attached statically on the product. Alternatively, the code also may be associated to the product dynamically. The printing machine receives the code to be printed on the product (or to be affixed on the product by other means) from the central server computer. According to one aspect of present invention, it is possible that the printing machine and/or the packaging machine is/are in data connection with a central server or is part of the central server. Typically, the Code is a QR-Code which is applied to the product during or after manufacturing of the product. Alternatively, the code may be a barcode (which is not to be equaled with the second code, being part of the response message and which is sent back as response from the server to the mobile device).

As explained above, present application may be applied according to a first application scenario in which a barcode is sent back from the server to the mobile device as part of a response message. Then, the barcode may be presented on the barcode scanning cashier in order to factorize the respective product. Here, discount information may be applied immediately, dynamically and independent of the (first) Code on the product itself. No additional printing costs (e.g. for booklets) are generated when starting a marketing campaign. Thus, in contrast to conventional marketing campaigns via printed labels, any campaign be realized and stopped immediately and without retooling cost or any other kind of printing costs.

In a second embodiment it is possible to sent back a second QR-Code (instead of a barcode) from the server to the mobile device, which afterwards is read in by a QR-Code scanning cashier (e.g. ticket scanners). However, this necessitates that the cashier is equipped with a QR-Code reader in order to import the QR-Code which is displayed on the display of the mobile device after it has been received by the same.

A major advantage of present invention is to be seen in that the product of the plurality of products may be labeled or coded dynamically even after the product has been provided and equipped with the first code and thus after manufacturing of the product. For example, if a manufacturer has produced his products which may be purchased in a store the product-related sales or gross figures may show that during a specific time only very few products have been sold. In this case the client (manufacturer) may decide to initiate a discount action, which may be applied to the products which already have been labeled and which are already for sale or disposable (in the store). Moreover, the discount action may be applied to all products or to a selection of the products (of the manufacturer) without changing physical labeling of the products. This is possible, because according to an embodiment of the invention there is a virtual labeling by means of the dynamically associated digital representation of the response message with the barcode. The barcode serves as a second Code which is only provided as a digital representation on the display of the mobile device and thus virtually.

The response message may include discount data and/or other price-related data and/or product-related data (for example additional information with respect to the product), taking into account a point of sale or a geographical location of the product and/or a point of time, which might be a purchase time and/or other information. Preferably, this data is included in the QR-package. With this information at hand, the server is in the position to initiate marketing actions which may be executed immediately and also for already labeled products.

The response message and/or the barcode may be associated to the product for a pre-configurable timespan and/or for a pre-configurable area of location. This has the advantage that the discount actions and/or other product-related procedures may be applied very flexible without the need to change the packaging and labeling process of the respective products.

According to a preferred embodiment the server not only receives labeling information from the client, but also sends logging data to the client. The logging data may comprise data relating to database accesses with respect to the products, transmitted QR-packages and/or generated response messages. In extended embodiments it is also possible to log additional information with respect to the mobile device owner (for example time-related data and position-related data) in order to be able to analyze purchase information and to perform statistical analysis.

According to an aspect of present invention the server provides a platform to be accessed by the mobile device and by the respective client out of a plurality of clients. Additionally, other computer-based instances may log onto the server's platform. In order to make sure that the system works safe and is securely protected against misuse and hacking, access to computer network is controlled by authentication means comprising password-controlled procedures, cryptographic and/or biometric procedures. Preferably, the clients have to authorize themselves for accessing the platform. In the preferred embodiment it is not necessary to enter specific authorization data as input for the mobile device. However, as an option, additional authorization procedures may also be applied on the side of the mobile device.

According to another aspect present application refers to a central server computer acting as a platform for exchanging data between the mobile device and the central server computer for dynamically associating a response message to at least a physical product out of a plurality of products, having an input and a mobile output interface, and comprising an access module, a memory or a database and a response message generator.

According to an aspect present application refers to a computer-implemented method for exchanging data between a mobile device and a central server computer for dynamically associating a response message to at least one physical product according to one of the attached claims.

The method starts with scanning a first code on the product, which is statically associated to the product and importing the scanning information into the mobile device in order to generate a QR-package to be transmitted to the central server. The QR-package comprises the scanned Code, a location identifier and/or a timestamp. The timestamp particularly refers to the point of time for scanning.

After having received the QR-package on the central server, the database is accessed in order to lookup the second Code, particularly, the barcode and labeling information, which has been provided by the client (for the related products). After having accessed the database a response message is generated, comprising a dynamically associated second Code/barcode and optionally a procedure initiation signal, which includes information in order to initiate product-related or consumer-related actions (mobile device owner related). The response message is sent back from the server to the mobile device in response to the received QR-package. After having received and processed the response message on the mobile device the received second Code/the barcode is displayed on the mobile devices' display unit. During displaying the barcode on the display of the mobile device, the owner of the mobile device only needs to put his mobile device in an activation area with respect to the barcode scanner cashier, so that the barcode scanner in the cashier may import the displayed barcode on the mobile device and use the same for factorizing the product.

According to an aspect of present invention the response message may not comprise a barcode. Then the response message only consists of the procedure initiation signal. Other embodiments refer to the response message only consisting of the second Code (without a procedure initiation signal). Preferably, the response message comprises both, the second Code and the response procedure signal.

A major advantage of this solution is to be seen in that the client (of the web content management system resident on the server, the manufacturer of the products) may amend his labeling information in any (purchase) point of time and even after manufacturing and packaging/labeling of the product and as long as the product is for disposal. The client may amend labeling information, comprising configuration and data, like timespan data and location area data any time he wants to so that additional procedures may be applied immediately. Another advantage is that no additional printing costs (e.g. for redesigning the packaging, for adding booklets, etc.) are generated when starting a new marketing campaign. Thus, cost for in marketing campains can b reduced dramatically as compared with conventional campaigns making use of printed labels. Another advantage is waste avoidance and conservation of the natural resources.

According to another aspect present invention refers to a computer program product, comprising a computer program which may be stored on a data carrier (for example a memory stick or a mobile data carrier or hard disks, directly embedded into the computer) or on a computer-readable medium or the computer program may be loaded in one or several - particularly distributed - computers (for example on the server platform or on the client-related computer) via a network connection and which comprises computer-readable instructions, wherein the instructions are adapted to execute a method according to the above-mentioned method, if the instructions are executed on the at least one computer.

Further, the aforementioned method may be embedded in the form of a computer program. The program may also be stored on a computer-readable medium and is adapted to perform the before mentioned method when run on a computer device (which may be the client computer or the server computer or the mobile device computer as well).

The computer-readable media, the memory and/or the database may be a built-in-medium installed inside a computer device's main body or be removable arrange so that it can be separated from the computer. Examples include, but are not limited to rewriteable non-volatile memories, such as read-only memories and flash memories and hard disks. Examples for removable media include, but are not limited to optical storage media such as CD-ROMs and DVDs and other magnetooptical storage media.

### BRIEF DESCRIPTON OF THE DRAWINGS

The Figures illustrate principles of the present invention according to specific embodiments. Thus, it is also possible to implement the invention in other embodiments, so that these Figures are only to be construed as examples. Moreover, in the Figures, like reference numerals designate corresponding modules or items throughout the different drawings.
Figure 1 illustrates a schematic and simplified diagram according to one embodiment of a computer-implemented network;
Figure 2 is a flowchart illustrating an embodiment of the method for automatically and dynamically controlling labeling of products.

### DETAILED DESCRIPTION OF THE DRAWINGS AND PREFERRED EMBODIMENTS

In the following detailed description there will be described embodiments of a method a network for dynamically controlling labeling of products. The meaning of specific details should be construed as examples within the embodiment and are not exhaustive or limiting the invention to the precise forms disclosed within the examples. One skilled in the art will recognize that the invention can also be practiced without one or more of the specific details (for example network connection and modules of the server and the client) or with other methods, implementations, entities and datasets to be transferred between the computer-based instances.

Further, a person skilled in the art will recognize that the invention is implemented on one or several computers and thus is familiar with basics of computer systems so that basic computer functions and operations are not shown or described in detail here.

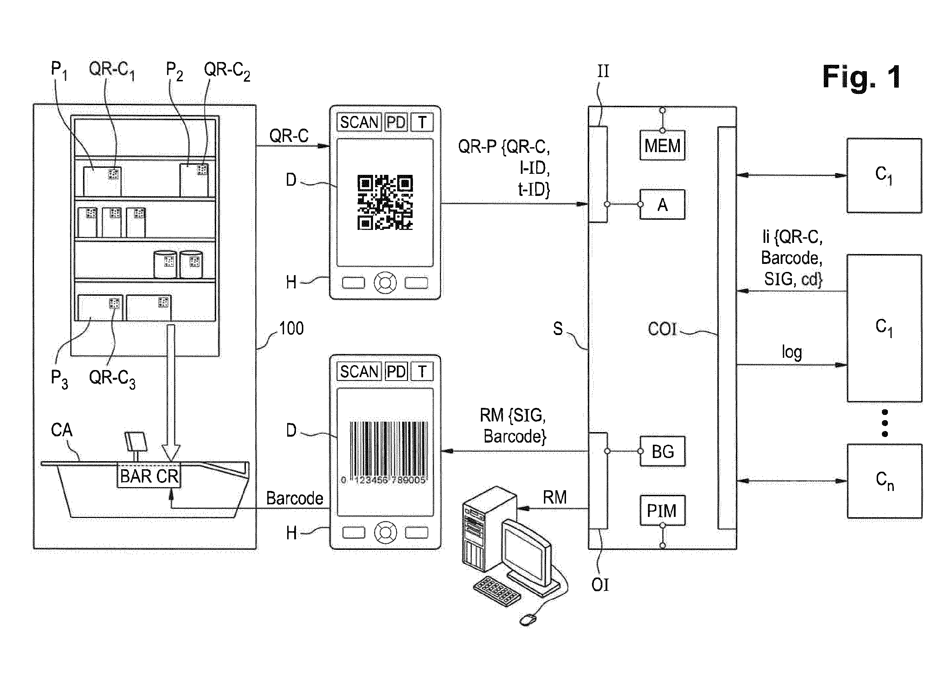

Figure 1 shows a schematic overview of a preferred embodiment of the computer network for data exchange between a mobile device H and a server platform S for dynamically associating a response message RM to at least one physical product of a plurality of products.

In Figure 1 the product is marked with reference numerals P. Generally, the products P may be sold in a supermarket 100. The supermarket is equipped with a cashier CA. The cashier typically comprises a barcode reader BARCR which is adapted to import a barcode by optical scanning means and to import a digital binary representation of the optical signal and to process the same in order to price in the product.

Typically a manufacturer of the products is a client C of the system and has access to the central server S.

The client C usually is equipped with a packaging machine and a printing machine in order to label the products P to be sold. The labeling may be done by attaching a two-dimensional code on the product P. Preferably, this is a QR-Code QR-C. Thus, a first product P₁ is labeled with a first Code OR-C₁, a second product P₂ is coded with a QR-Code CR-C₂ and so far. The products P may be offered in a supermarket shelf as schematically shown in Figure 1 on the left-hand side.

A user is provided with the mobile device H, particularly his mobile phone, smartphone, iPad or the like. The mobile device H comprises a display H and additionally further electronic modules, like a Code scanner SCAN, a position detector PD and optionally a transmitter T.

The user uses his mobile device H for scanning the QR-Code QR-C on the respective product P his interested in. The scanned Code QR-C is received by the device's scanner SCAN and processed accordingly. The digital representation of the scanned Code QR-C is processed by the transmitter T. The transmitter T is adapted to import data of the mobile phone's position detector PD, referring to the actual geographical position of the user and is adapted to import timing information which is also provided by the mobile device H. The transmitter generates a QR-package QR-P which at least comprises the scanned Code QR-C, the location identifier I-ID and/or a timestamp t-ID. The QR-package QR-P may additionally be processed locally and/or centrally on the server S. For example, the QR-package QR-P may be compressed and encrypted. Further additional security procedures may be applied. The transmitter T, then, transmits the QR-package QR-P to the central server S by means of an input interface II.

The central sever computer S is equipped with the input interface II and with a mobile output interface Ol and additionally comprises the following electronic modules, namely an access module A, a memory MEM and a response message generator BG and a procedure initiator module PIM. Other embodiments provide the central server computer as with additional modules. The central server computer S is adapted to provide a web-based content management service for dynamic labeling of products P.

For this reason the memory MEM which may be implemented in a relational database holds data with respect to the product and with respect to pricing, discount, marketing and additional information. Particularly, the database MEM stores data relations for a specific product P, a QR-Code QR-C, a barcode and/or a response procedure signal SIG. The server S hosts several client systems, which may only be accessed by the respective clients C in a dedicated (secure) manner. Each client, thus, may access his "own" client platform on the server S, where he can adapt and configure delete and store product-related and/or consumer-related data. For this reason, the system provides a specific protocol for message exchange between sever S and client C. Usually, a message with labeling information Ii is sent from the client C to the server S. Labeling information Ii comprises relations with respect to the specific product P and/or to the respective consumer alias owner of the mobile device H. These relations comprise relations for the product P, the (first) QR-Code QR-C, the (second) Code/barcode, the response procedure signal SIG and/or configuration data cd.

The configuration data cd comprise timespan data td and/or location area data Id.

For example a client C may decide to label all football-related products P₁ to Pₖ, which are sold in supermarket 100 for the time during a specific football match in the nearness of supermarket 100 for a discount price. This is simply implemented by dynamically changing content of the database memory in order to generate an assigned barcode which encodes discount for a dedicated time phase (during soccer game) and region (nearness of soccer field). Further, the consumer who buys the football-related products P may be awarded with collecting points. This event is encoded in procedural initiation signal SIG. However, the client C decides that this discount action will only to be active during the time of the football game and only within the specific area. Therefore, he defines configuration data timespan td and location area data Id accordingly. These data are sent as labeling information Ii to the server S. The labeling information Ii are stored in database MEM on the central server S and may be accessed by access module A by the central server S for generating a response message RM. Data exchange between server S and client C is executed by means of a client output interface COI. Preferably client output interface COI is based on one of the internet protocols or on other network connectios. Generally, the network between mobile device H and server S and the network between server S and client C need not necessarily to be the same. However, preferably, the input interface II and the output interface Ol, as well as the client output interface COI are based on an internet protocol. The data exchange between mobile device H and server S is bidirectional and data exchange between server S and Client C might also be unidirectional (client C only sending configuration data to server S) or bidirectional (client C will be informed about received QR-packages QR-P and log data log).

The barcode generator BG is adapted to generate a response message RM. Preferably, the response message RM comprises a barcode, which is to be sent back to mobile device H and to be displayed on the display D on mobile device H. Later, the barcode may be imported and processed by the barcode reader BARCR of the cashier CA.

In a preferred embodiment the barcode generator BG generates the response procedure signal SIG. This signal SIG represents discount actions or other events and procedures relating to the product P and/or to the owner of the mobile device H.

Due to the web-based content management system, which is hosted on central server S, it is possible to apply adaptive discount - and/or event Code to products P, even after products P have been put on market and have been labeled with the first code.

According to another preferred embodiment it is also possible that the barcode generator BG does not generate a barcode, but only generates a response procedure signal SIG and/or other signals relating to product procedures. In this case the response message RM only comprises at least one response procedure signal SIG or a set of such signals and the second Code.

The procedure initiator signal module PIM may interact with other computer-based modules and instances in order to process the response procedure signal SIG. For example the procedure initiation module PIM may interact with an external database, which stores information with respect to awarding owner's points. The bonus system may also interact directly with the mobile device H.

As can be seen in Figure 1, clients C do not necessarily interact directly with a supermarket 100 in order to initiate discount actions or in order to initiate marketing campaigns for the products P to be sold in supermarket 100. The clients C are redirected to the web-based content management system on the server S, which interacts with mobile device H.

As described above, typically central server computer S sends a response message RM back to mobile device H in response to the received QR-package QR-P. In this embodiment the server S does not interact with computers and/or databases, associated to supermarket 100. Further, central server computer S does not interact with cashier CA of supermarket 100.

However, in an alternative embodiment it is nevertheless possible that central server S interacts with cashier CA, which is depicted in Figure 1 with the dotted line, starting at server S and ending at the cashier CA.

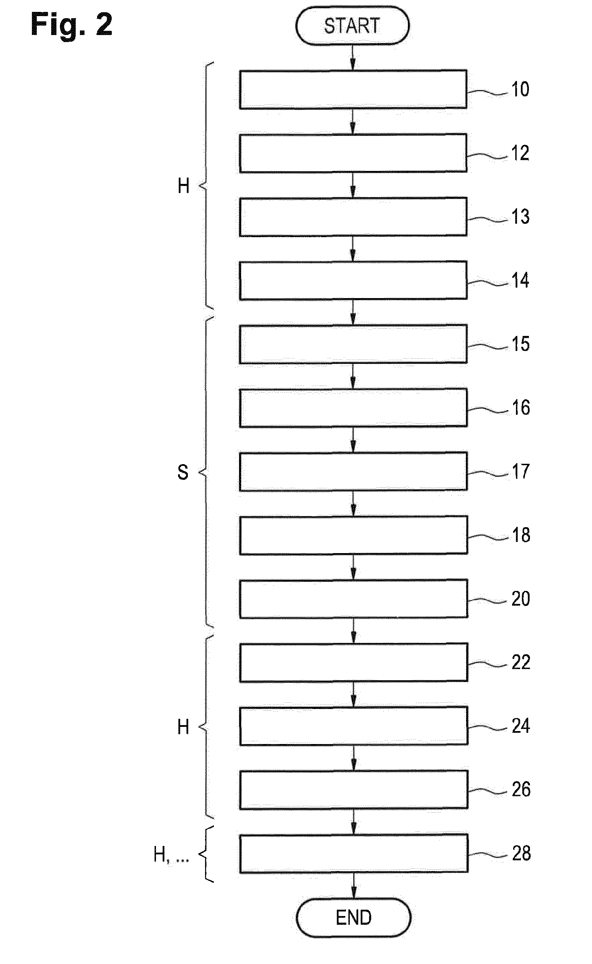

In the following and with respect to Figure 2 a typical workflow of present computer-implemented method is explained, which is based on a preferred embodiment of present invention.

After starting the computer-implemented method in step 10 the QR-Code QR-C of the respective product P is scanned by the scanning module SCAN of mobile device H.

In step 12 the position and the location of the mobile device H are detected in order to automatically generate a location identifier I-ID and a timestamp t-ID. Generally, it is not necessary to process both of these data sets relating to position and time. However, it is also possible only to detect the location of the mobile device H or only the timestamp t-ID or non of these data (and by replacement: other package data).

In step 13 a QR-package QR-P is generated. The QR-package QR-P comprises the scanned QR-Code QR-C and a metadata set. The metadata set may comprise location identifier I-ID and/or timestamp t-ID. Generating the QR-package QR-P comprises compressing the dataset, defining the specific data format for transformation of the QR-package QR-P to the central server S, splitting the QR-package QR-P in distinct sub-packages in case of complex data and/or encrypting data. In order to enhance security of the system it is also possible that authority procedures may be applied before transmitting the QR-package QR-P to the central server S in step 14.

In step 15 the QR-package QR-P is received on the central server computer S. Step 15 may additionally comprise receiving labeling information Ii from client C. However, it has to be noted that a labeling information Ii and/or configuration data cd may be received any time and independent of data communication between mobile device H and central server S. This brings the major advantage, that a client may choose the time for changing product-related procedures any time he wants to.

In step 16 the memory or database MEM is accessed with the received QR-package data QR-P.

In step 17 a matching is executed for matching the received datasets for the QR-package QR-P and the labeling information Ii. Particularly, the received location identifier I-ID is compared with the location area data Id and/or the received timestamp t-ID is compared with time interval data td. If both comparisons show equality, then the stored Code (barcode) and the optionally stored procedures may be applied to the specific QR-package QR-P.

In step 18 the response message RM is dynamically generated and associated to the QR-package QR-P. As described above, the database MEM may store codes and actions in case the matching result is equal. However, it is also possible that database MEM may store additional actions and codes in case the matching result is unequal. The response message RM is in response to the received QR-package QR-P for a specific product P and optionally may be associated to the product P for a configurable timespan and a configurable geographical area. The response message RM, usually, comprises a second Code (the barcode) which is indirectly associated to the product P according to configuration data cd. The response message RM further comprises a response procedure signal SIG.

In step 20 the response message is transmitted to mobile device H and/or to the cashier CA of the supermarket 100. However, this is an optional transmission and therefore, this transmission is depicted in Figure 1 only as dotted line.

In step 20 the response message RM is provided on mobile device H.

In step 24 the response message is processed on the mobile device H.

In step 26 the barcode is displayed on the display D of mobile device H.

In step 28 preconfigured procedure(s) are initiated according to response procedure signal SIG.

After step 28 the method ends and may be applied iteratively for the same or for other products P. It has to be mentioned that the above-mentioned may be applied in parallel for products P, different supermarkets 100, different mobile devices H and/or different clients C. This may be done in parallel and iteratively.

By applying the above-mentioned it is possible to initiate promotion actions and marketing campaigns according to pre-configurable configuration parameters, for example time and geographical area. These campaigns and actions may be executed without changing packaging and labeling of the respective products P. Further, the packaging machines and the labeling of the products during manufacturing of the same needs not to be amended or changed. According to the invention each product P may be labeled with two Codes, namely a first QR-Code QR-C and a dynamically associated second Code, the barcode. The barcode may be amended without amending the first QR-Code QR-C. This makes the system very flexible. Further, material and manufacturing costs may be reduced significantly as packaging machines need not to be reinstalled with amended procedures.

According to a first embodiment the clients C are manufacturers of end consumer products, which are to be sold in stores and supermarkets 100. However, it also possible that clients C do not pose discount information on the content management system on the central server S, but want to process win games with respect to the respective product P. In this case the consumer scans the QR-Code QR-C on the product P and imports the data into his processor and transmitter T. The transmitter T in turn opens the browser of the mobile device H and loads the associated game webpage for the product P. This may be controlled with respect to time and geographical area. Thus, a client C may decide that a specific game may only be executed for a specific timespan in a specific geographical area. Parallel to loading the webpage for the game the transmitter T transmits the QR-Code QR-C to the central server in order to look up a result entry for the specific QR-Code QR-C. The result may indicate "winner" or "looser". The result may be transmitted via response message RM to the mobile device and will be displayed on display D. Additionally, it is also possible that further information is sent to the mobile device H, for example relating to an amount of money to be paid, an amount of bonus points to be collected, additional events etc.

It is also possible to combine the methods described above or to use the system for posting information in social networks. In case the owner of the mobile device H scans a QR-Code QR-C of a respective product P and initiation of related method steps the owner of the mobile device H will receive a message on his display D whether or not he would like to add product-related information in a social network. If he admits the URL is automatically loaded on the browser of the mobile device H.

According to a preferred embodiment the method described above may activated only in case a trigger signal is received either by the owner of the mobile device H or by the respective client C. Only if client C and/or the owner of mobile device H enter the trigger signal, which will be transmitted to the central server S the method may be activated. For example it is possible that client C decides to initiate a marketing campaign for a specific time (only in the evening after 5 o'clock and before 8 o'clock and /or only in geographical distance of 5 km relating to an event's location) then, only within these configuration data cd the steps may be activated. In the example given above a consumer may not be let to the content management server side S in the morning. Accordingly, the manufacturer can decide to drive forward sales of a certain product P and give discount for example 30 % on a certain product P by making use of the dynamically associated barcode as the second code. Further, the client C may decide that the discount may be granted immediately when paying for the product P at the cashier desk CA of the supermarket 100 instead of providing credits when buying the product the next time.

In case the cashiers CA may be equipped with QR-Code scanners it is also possible to send a second QR-Code QR-C as a response message RM. This second QR-Code QR-C may be imported in the QR-cashier CA. In case the cashier is only equipped with a barcode reader BARCR then the response message RM refers to a barcode as a second Code. The result for the respective consumer (discount or credit points etc.) may be visualized in the respective response message on his mobile phone, so that he is informed about the result immediately. A major advantage compared to state of the art systems is that in case of a discount procedure the invention will result in an immediate sales price reduction and thus be much more motivating to buy the product P than collecting vouchers which can be redeemed at the earliest when visiting the supermarket 100 the next time and thus only in future. Generally, the result of the method may be applied at once and also for products P which already have been labeled with the first code.

In another embodiment, the cashier CA is equipped with a barcode reader BARCR. Further, the cashier CA is connected with an internal or external QR-Code reader for importing a QR-Code QR-C as a second Code sent back from the central server in the response message RM.

As mentioned above, the method provides the clients C which more flexibility. The may apply specific discount and marketing procedures to one specific product P or a set of products P for example for all yoghurts of the type XY or for all products with 100 g content. Further, the discount action may be configured to apply to specific postal codes or within specific time phases (for example for several hours, days and/or weeks etc.). Logging data log may be collected centrally and may be sent to Client C.

Additionally, it is possible to provide login and logout functions.

It is also possible to apply the system mentioned above not for discount procedures but for procedures providing the consumer with meta information or additional information with respect to the product P. For example booklets or other information may be given for example with respect to packaging of the product, manufacturer of the product, distribution of the product and/or ingredients of the product in case of food products.

A person skilled in the art may recognize that it is possible to combine the central server S with other instances for example to combine it with an electronic trading stock system for managing inventory.

A preferred embodiment of present invention refers to a QR-package QR-P which combines location and time data with the QR-Code QR-C of the respective product.

It has to be mentioned that it is possible that a client C initiates several different actions in parallel for one single QR-Code QR-C (and thus for one single product P). For example he may initiate to provide the end consumer with standard information for the respective product, to provide the end consumer with a webpage-link/URL-address and to initiate a game and additionally to initiate a discount procedure. The content management system, which is implemented on the central server S hosts databases for different clients C. Therefore, different clients S may manage their products on the same server S. Also different end consumers may manage their actions by means of their mobile devices H on the central server S.

Finally, it has to be noted that the term "labeling" refers to dynamically associating a response message to at least one physical product of a plurality products.

Finally, it should be pointed out that the description of the example embodiments are, in principle, not to be understood as restrictive in terms of a particular physical implementation of the invention. In particular, it is obvious to a person skilled in the relevant art that embodiments of the invention can be implemented partially or completely in software and in a form distributed over a plurality of physical products - particularly including computer program products.

Any of the aforementioned methods may be embodied in the form of a system or device, including, but not limited to, any of the structure for performing the methodology illustrated in the drawings.

Example embodiments being thus described, it will be obvious that the same may be varied in many ways. Such variations are not to be regarded as a departure from the spirit and scope of the present invention, and all such modifications as would be obvious to one skilled in the art are intended to be included within the scope of the following claims.

### Reference Numerals

- 100: supermarket
- P: product
- QR-C: QR-Code
- CA: cashier
- BARCR: barcode reader
- H: mobile device
- SCAN: Code scanner
- PD: position detector
- T: transmitter
- D: display
- I-ID: location identifier
- t-ID: timestamp
- QR-P: QR-package
- RM: response message
- SIG: response procedure signal
- II: input interface
- OI: output interface
- COI: client output interface
- S: central server computer
- A: access module
- MEM: memory, database
- BG: response message generator, particularly barcode generator
- PIM: procedure initiator module
- li: labeling information
- cd: configuration data
- td: timespan data
- ld: location area data
- log: logging data

- 10: scanning QR-code
- 12: position and location detection of handy and generating I-ID and t-ID
- 13: generate QR-package
- 14: transmit QR-package to server S
- 15: receiving QR-package on server
- 16: accessing memory
- 17: matching location identifier with location area data and timestamp with timespan data
- 18: dynamically generating and associating response message (in response to receive QR-package)
- 20: transmitting response message to handy H
- 22: providing response message on handy H
- 24: processing response message on handy H
- 26: displaying received barcode on display D of handy H
- 28: initiating procedure(s) according to SIG signal

## Claims

1. Computer network for exchanging data between a mobile device (H) and a central server computer (S) for dynamically associating a response message (RM) to at least one physical product of a plurality of products, comprising:
- The mobile device (H) with internet access and with
○ a Code scanner (SCAN) for scanning a two-dimensional, statically affixed Code (QR-C) on the physical product,
○ a position detector (PD) which is adapted to automatically detect the actual position of the mobile device (H) for automatically calculating a location identifier (I-ID),
○ a transmitter (T) which is adapted to transmit a QR-package (QR-P) to at least one central server computer (S), wherein the QR-package (QR-P) comprises the scanned Code (QR-C) and optionally the location identifier (I-ID) and/or a timestamp (t-ID),
○ a display (D) which is adapted for displaying at least a part of a response message (RM), wherein the response message (RM) is received from the central server computer (S) in response to the transmitted QR-package (QR-P)
- The central server computer (S) with
○ An input interface (II) for receiving the QR-package (QR-P) from the transmitter of the mobile device
○ An access module (A) for accessing a memory (MEM) by automatically generating at least one access instruction in order to access the memory (MEM), based on input parameters, the input parameters comprising the received Code (QR-C) and optionally the location identifier (I-ID) and/or the timestamp (t-ID), and for providing a database access result
o The memory (MEM) storing relations of Codes (QR-C), location identifiers (I-ID), timestamps (t-ID) and/or procedure initiation signals to response messages (RM)
o A response message generator (BG) which is adapted to automatically generate a response message (RM) based on the result of the database access result, wherein the response message (RM) is associated to the QR-package (QR-P) and indirectly to the product and wherein the response message (RM) may comprise a response procedure signal (SIG) and/or a further Code
o A procedure initiator module (PIM), which is adapted to automatically initiate at least one response procedure if the generated response message (RM) comprises the response procedure signal (SIG)
o A mobile output interface (Ol) for transmitting at least the generated response message (RM) to the mobile device (H),
wherein the received response message (RM) is processed on the mobile device (H) and is dynamically associated to the received QR-package (QR-P).

2. Computer network according to claim 1, wherein the computer network comprises a packaging machine with a printing machine which is adapted for labeling each of the products with a Code (QR-C) and wherein the printing machine receives the Code (QR-C) to be printed on the product from the central server computer (S).

3. Computer network according to claim 1, wherein the computer network further comprises:
- A cashier (CA) which is equipped with a barcode reader (BARCR) in order to read barcodes inter alia presented on the display (D) of the mobile device (H) in order to automatically calculate the product's price and
- wherein the response message (RM) comprises a barcode.

4. Computer network according to one of claims 1 to 3, wherein the further Code may be a barcode and is dynamically associated to the physical product by means of accessing the central server computer (S) such as the barcode to be associated to the product may be changed without changing the Code (QR-C) on the product itself.

5. Computer network according to at least one of preceding claims, wherein different further Codes may be dynamically associated to one statically coded product even after the product has been provided with the Code (QR-C) and /or any time before the product is sold.

6. Computer network according to at least one of preceding claims, wherein the Code (QR-C) or the further Code is a digital two-dimensional code, which is printed on or attached or assigned to the product, particularly on a separate ticket on the product by a packaging machine, and is particularly a barcode or a QR-Code.

7. Computer network according to at least one of preceding claims, wherein the response message (RM) includes discount data, vouchers and/or other price or product related data, optionally considering the point of sale and the point of time and/or other information, included in the QR-package (QR-P).

8. Computer network according to at least one of preceding claims, wherein the response message (RM) and/or the further Code may be associated to the product for a pre-configurable time span (td) and/or for a pre-configurable location area (ld).

9. Computer network according to at least one of preceding claims, wherein all or selected memory accesses, QR-packages (QR-P) and/or generated response messages (RM) are logged and tracked for optional further processing and statistical analysis and are sent to client (C), if requested.

10. Computer network according to at least one of preceding claims, wherein access to the computer network is controlled by authentication means, comprising password controlled, cryptographic and/or biometric procedures.

11. Central Server Computer (S) acting as server for exchanging data between a mobile device (H) and a central server computer (S) for dynamically associating a response message (RM) to at least one physical product of a plurality of products, comprising:
- An input interface (II) for receiving a QR-package (QR-P) from a mobile device (H) or a cashier acting as client computer, wherein the QR-package (QR-P) comprises a scanned Code (QR-C) and optionally a location identifier (I-ID) and/or a timestamp (t-ID), wherein the scanned Code (QR-C) is statically affixed to the product
- An access module (A) for accessing a memory (MEM), based on input parameters, comprising the received Code (QR-C), the location identifier (I-ID) and/or the timestamp (t-ID) and for providing a database access result
- The memory (MEM) storing relations of Codes (QR-C), location identifier's (I-ID) and/or timestamps (t-ID) and response messages (RM),
- A response message generator (BG) which is adapted to automatically generate a response message (RM) based on the database access result, wherein the response message (RM) may comprise at least one further Code, which may be a barcode, wherein the response message (RM) is associated to the QR-package (QR-P) and indirectly to the product and wherein the response message (RM) may comprise a response procedure signal (SIG) and a further Code
- A mobile output interface (OI) for transmitting the generated response message (RM) to the mobile device (H) or to the cashier, wherein the received response message (RM) is processed on the mobile device (H) and is dynamically associated to the respective product.

12. Central Server (S) according to claim 11, wherein the central server (S) further comprises:
- A barcode generator (BG) for generating a barcode to be sent to the mobile device (H) in order to be associated or attached to the product
- A client output interface (COI) for exchanging product related data between the central server (S) and a client (C), wherein the client (C) sends labeling information (li) to the central server (S), to be stored in the memory (MEM), wherein labeling information is looked up for generating the response message (RM) on the Server (S) and wherein labeling information (li) comprises an association of Code (QR-C), barcode and/or the response procedure signal (SIG) to the respective product and configuration data (cd), wherein the configuration data (cd) are dynamically configured and comprise timespan data (td) and/or location area data (ld), so that the response message generator (BG) in the central server (S) is adapted to apply labeling information (li) only to those QR-packages (QR-P), for which the location identifier (I-ID) corresponds to the location area data (ld) and/or the timestamp (t-ID) corresponds to the timespan data (td) provided by the client (C).

13. Computer implemented, client-server based method for exchanging data between a mobile device (H) and a central server computer (S) for dynamically associating a response message (RM) to at least one physical product of a plurality of products, comprising the following steps:
- Scanning (10) a Code (QR-C) of a physical product by means of a mobile device (H)
- Automatically detecting (12) the actual position of the mobile device (H) for automatically calculating a location identifier (I-ID)
- Transmitting (14) a QR-package (QR-P) to at least a central server computer (S), wherein the QR-package (QR-P) comprises the scanned Code (QR-C) and optionally the location identifier (I-ID) and/or a timestamp (t-ID)
- After having received the QR-package (QR-P) on the central server computer (S), automatically generating at least one access instruction to a memory (MEM) for accessing (16) the memory (MEM), based on input parameters, comprising the received QR-Code (QR-C), the location identifier (I-ID) and/or the timestamp (t-ID)
- Based on a database access result of the memory access, dynamically associating (18) a response message (RM) to the received Code (QR-C), wherein the response message (RM) may comprise a further Code and/or a response procedure signal (SIG)
- Transmitting (20) the response message (RM) to the mobile device (H) and/or to another computer-based instance in response to the received QR-package (QR-P)
- Providing (22) and processing the response message (RM) in response to the transmitted QR-package (QR-P) on the mobile device (H) and/or displaying the further Code on a display (D) of the mobile device (H) for being entered in a cashier (CA) for the purpose of scanning the displayed further Code inter alia for selling the product, wherein the received response message (RM) is dynamically associated to the respective product.

14. Computer implemented, client-server based method according to claim 13, wherein the method further comprises:
- Receiving dynamically configurable labeling information (li) by means of a client output interface (COI) of a client (C) of a plurality of clients (C), wherein labeling information (li) comprises an association of Code (QR-C), barcode and/or the response procedure signal (SIG) to the respective product and configuration data (cd), wherein the configuration data (cd) comprises dynamically configurable timespan data (td) and/or location area data (ld), so that the central server (S) is adapted to match received QR-package (QR-P) with received labeling information (li) in order to apply labeling information (li) only to those QR-packages (QR-P), for which the location identifier (I-ID) corresponds to the location area data (ld) and/or the timestamp (t-ID) corresponds to the timespan data (td) provided by the client (C).

15. Computer program product, comprising a computer program, which may be stored on a data carrier or a computer readable medium or loaded in one or several - particularly distributed - computer(s) (S, H) via a network connection and which comprises computer readable instructions, wherein the instructions are adapted to execute the method according to method claim, mentioned above, if the instructions are executed on the at least one computer (S, H).
